# EUROPEAN PATENT APPLICATION

(11) **EP 1 479 654 A1**
(43) Date of publication of application: **24.11.2004**
(21) Application number: 03743048.5
(22) Date of filing: 27.02.2003
(51) Int. Cl.: C01G 35/00, C01G 33/00

(54) **METHOD OF PURIFYING NIOBIUM COMPOUND AND/OR TANTALUM COMPOUND**

(30) Priority: 27.02.2002 JP 2002052411
(71) Applicant: Stella Chemifa Kabushiki Kaisha, Osaka-shi, Osaka-fu 541-0047 (JP)
(72) Inventor: KIKUYAMA, Hirohisa, Izumiootsu-shi, Osaka 595-0075 (JP); WAKI, Masahide, Izumiootsu-shi, Osaka 595-0075 (JP); IZUMI, Hiroto, Izumiootsu-shi, Osaka 595-0075 (JP); YAZAKI, Hirofumi, Izumiootsu-shi, Osaka 595-0075 (JP); AOKI, Kenji, Izumiootsu-shi, Osaka 595-0075 (JP); HASHIGUCHI, Shinji, Izumiootsu-shi, Osaka 595-0075 (JP); KAWAWAKI, Masatsugu, Izumiootsu-shi, Osaka 595-0075 (JP); MURAKAMI, Yuko, Izumiootsu-shi, Osaka 595-0075 (JP)
(74) Representative: Dr. Weitzel & Partner
(86) International application number: PCT/JP2003/002224
(87) International publication number: WO 2003/072503

(57) **Abstract**

An object of the present invention is to provide a method for purifying a niobium compound and/or tantalum compound in a simplified manner at a low cost.

The object is met by providing a method for purifying a niobium compound and/or tantalum compound whereby a niobium compound and/or tantalum compound dissolved in a solvent is allowed to precipitate to be isolated.

## Description

### Technical Field

The present invention relates to a method for improving the purity of a niobium compound and/or tantalum compound.

### Background Art

Niobium has been used as an additive to steel because niobium is effective in stabilizing carbon in steel and preventing the progression of corrosion among particles. A niobium alloy has been used as a material of a conductive tube attached to the light emitting portion of a highpressure sodium lamp, a superconductive material and an additive to a super alloy. Recently, demand for niobium oxide is notable because niobium has been widely used in electronic and optical fields. Particularly in those fields, highly pure niobium is indispensable. Purification of niobium compounds has been achieved by various methods depending on the niobium compounds serving as starting materials. For example, the purification of niobium oxide has been achieved by differential crystallization, solvent extraction, ion-exchange resin-based separation, distillation, etc. However, ores used for the extraction of niobium such as columbite or niocalite contain tantalum together with niobium. Moreover, since niobium shares many physical and chemical properties with tantalum, it has been extremely difficult to separate niobium from tantalum. Accordingly, many methods proposed heretofore include extracting metallurgical products containing the two elements from ores.

For example, according to a method disclosed in US Patent No. 2,962,327, the ore containing both niobium and tantalum is ground to a powder which is treated with an acid mixture comprising hydrofluoric acid and mineral acid, e.g., sulfuric acid, so that niobium and tantalum are dissolved in the acid mixture together with other metal impurities such as iron, manganese, calcium, rare earth elements, etc. The solution is allowed to contact with an organic solvent such as ketone, ester or ether of a lower fatty acid, particularly methyl-isobutyl-ketone, and niobium and tantalum are extracted through the organic phase.

According to a second method disclosed in a published Japanese Patent Application, Publication No. S58(1983)-176128, the solution described above is allowed to pass over an F-type anion-exchange resin layer to allow niobium and tantalum to be adsorbed to the resin layer, thereby separating the two elements from other metal impurities. Then, the two elements are dissolved in aqueous solutions of hydrofluoric acid and ammonium chloride to be recovered later.

Various processes for separating niobium from tantalum have been investigated. One such conventional process consists of separating the two elements dissolved in an aqueous solution based on the difference in their concentrations of salting-out and hydrogen ions. Specifically, when the concentrations of hydrofluoric acid and mineral acid constituting an acid mixture dissolving niobium and tantalum compounds are reduced, NbF₇²⁻ is converted into NbOF₅²⁻ while TaF₇²⁻ stays unchanged, and thus it is possible to selectively extract tantalum using an organic solvent such as methyl-isobutyl-ketone. Alternatively, it is also possible by a process contrary to the above to extract tantalum and niobium using an organic solvent and then to selectively extract niobium using an acidic aqueous solution. However, as discussed in a published Japanese Patent Application, Publication No. S62(1987)-158118, even if these methods are carried out, it is difficult to completely separate niobium from tantalum because methyl-isobutyl-ketone itself dissolves measurably in water. Thus, to achieve the complete separation, it is necessary to wash the water phase with methyl-isobutyl-ketone by means of a series of mixing-settling steps.

A yet another method is disclosed in a published Japanese Patent Application, Publication No. S64(1989)-31937. The method includes the use of a porous support made of active carbon or polypropylene to which an oxygen-containing organic solvent such as trioctylphosphine oxide or an organic solvent chosen from alkylamines in which the alkyl group has four or more carbon atoms is attached or linked, and comprises the step of flowing an acidic aqueous solution containing the two elements over the support so that only tantalum is adsorbed to the support and separated from the acidic solution. However, it is difficult to obtain a support to which an organic solvent is linked. Alternatively, if the organic solvent is impregnated into a porous support, dissolution of the organic solvent to the water phase poses a problem.

In view of these problems inherent to the conventional methods, an object of the present invention is to provide a method for purifying a niobium compound and/or tantalum compound in a more simplified manner at a lower cost than are possible with the conventional methods.

### Disclosure of the Invention

The present invention provides a method for purifying a niobium compound and/or tantalum compound, the method comprising dissolving the niobium and/or tantalum compound in a solvent and allowing the niobium and/or tantalum compound to be selectively precipitated.

The inventive method comprises dissolving a niobium and/or tantalum compound in a solvent and allowing the niobium and/or tantalum compound to be selectively precipitated. The solvent may comprise an acid mixture obtained by adding sulfuric acid, nitric acid or hydrochloric acid to an acid so that impurities become more soluble to the resulting acid mixture after the precipitation of the target compound than is possible with the single acid solution. The concentrations of acid components in the acid mixture may be reduced after the dissolution of the target compounds so that the concentration at which selective precipitation of one target compound occurs can be adjusted as appropriate.

To improve the purity of a niobium compound obtained, the precipitation step may be repeated. Precipitation of a niobium compound enables the isolation of the niobium compound as a crystal solid. The precipitation step enables niobium to be completely separated from other metal impurities such as Fe, Ni, Ti, etc., as well as tantalum or a kin belonging to the same element family. As a result of the precipitation step, impurities are transferred to the liquid phase while the precipitate is recovered to be purified, which enables the simplified purification of the niobium compound.

It is also possible to allow only the niobium compound to stay in the solution to be purified later, by choosing extraction conditions as appropriate. It is possible to isolate a highly pure niobium compound sought by employing the niobium compound thus obtained as a secondary niobium source. For example, a niobium compound dissolved in a hydrofluoric solution is allowed to precipitate, the precipitate is recovered by filtration, the recovered precipitate is subjected to alkali treatment to produce niobium hydroxide which is insoluble, and niobium hydroxide is fired to produce highly pure niobium oxide. It is also possible to obtain potassium fluoroniobate (K₂NbF₇) by allowing niobium hydroxide to react with potassium fluoride or potassium carbonate. It is further possible to obtain highly pure niobium metal by subjecting the highly pure niobium compound to alkali melting.

Needless to say, it is also possible to selectively extract a highly pure tantalum compound from a solution containing a crude tantalum compound by using the same method as above.

### Best Mode for Carrying out the Invention

According to the method of the present invention, it is possible to easily obtain a highly pure niobium compound (industrial product) by refining a crude niobium compound such as an ore that contains a low purity of niobium. If a niobium compound pretreated so as to contain niobium at about 98% and sold in the market is used as a starting material, it will be possible according to the method of the invention to easily improve the purity of niobium of the compound to 99.9% (3N) or higher. It is also possible according to the inventive method to recycle niobium compounds abandoned during niobium refining. The starting niobium compound to which the inventive method is most suitably applied is one that contains impurities such as Fe, Ni, Ti, etc. The starting niobium compound may contain, in addition to the above impurities, Al, Si, Ca, Mg, Sb, etc. The starting niobium compound may contain large quantities of impurities. However, the starting niobium compound is preferably pretreated so as to reduce its content of impurities to a low level. Suitable starting niobium compounds include, for example, niobium oxide, niobium halides, niobate compounds, alkali salts of niobium, etc., but niobium oxide is particularly preferred. The starting niobium compound may include a combination of two or more chosen from the above compounds.

Suitable solvent for dissolving the starting niobium compound are not limited to any specific ones, as long as they can dissolve the starting niobium compound. Suitable solvents include, for example, acids such as hydrofluoric acid, nitric acid, sulfuric acid, etc., alkaline solution, water, and organic solvents. Among them, hydrofluoric acid is most preferred. Hydrofluoric acid containing water at 80 wt% or more is preferably used. Occurrence of precipitation is not limited to a hydrofluoric acid solution, but precipitation may occur in any solvent, in water or in an organic solvent. The starting niobium compound may take the form of any appropriate niobate. The precipitate is recovered by filtration. The recovery of niobium is not limited to the precipitated compound. The filtrate may be used for recovery. To improve the purity of recovered niobium, the precipitation step may be repeated.

Suitable precipitation occurs as a result of cooling, condensation (e.g., evaporation-based condensation), adiabatic evaporation, etc. Precipitation may occur by cooling the starting niobium compound to a temperature below its melting point without posing any problem, but from the industrial viewpoint precipitation is allowed to occur most preferably at -40 to -30°C. The system may be placed under any atmospheric pressure, but from the industrial viewpoint, the system is preferably placed under normal atmospheric pressure. Although the precipitation period may vary depending on the starting niobium compound actually used, a ten-minute period will be adequate if the niobium compound has a sufficiently high concentration. Even if the niobium compound has a low concentration, the precipitation time of about 24 hours will be adequate. From the industrial viewpoint, however, the niobium compound preferably completes its precipitation in 1 to 3 hours.

Condensation involves evaporation of the solvent by heating, thereby allowing the niobium compound to precipitate. If condensation does not cause the precipitation of the niobium compound, the solution may be dried to provide a solid. Or the solution, after being concentrated, may be cooled to cause the niobium compound to precipitate.

Specifically, if a niobium compound is obtained as a precipitate from a hydrofluoric acid solution, further refining of the niobium compound may occur by three different processes. One process comprises neutralizing the niobium compound with an alkali, thereby converting the niobium compound into niobium hydroxide, and sintering niobium hydroxide into highly pure niobium oxide. Needless to say, it is also possible to obtain highly pure niobium oxide by simply sintering the niobium compound recovered as a precipitate. A second process comprises reacting the niobium compound with potassium fluoride or potassium carbonate to convert thereby the compound into potassium fluoronibate (K₂NbF₇). A third process comprises dissolving the highly pure niobium compound in an alkali to produce thereby highly pure niobium metal. Alternatively, needless to say, the niobium compound may be treated as an intermediate in the production of a highly pure niobium compound such as an Nb-containing salt, e.g., lithium oxyniobate (LiNbO₃), ammonium fluoroniobate (NH₄NbF₇), etc. It is possible by using such a highly pure niobium compound obtained by the above method as a starting material to isolate highly pure niobium metal which can be used as a highly functional material in various fields including electronics and optics.

Needless to say, it is also possible to purify tantalum by the same method as the one used for the purification of niobium. For example, it is possible to obtain a highly pure tantalum compound such as tantalum oxide (Ta₂O₅), lithium tantalate (LiTaO₃), potassium fluorotantalate (K₂TaF₇), tantalum metal (Ta), or other tantalum-containing salts by using, as a starting material, hydrofluorotantalate (H₂TaF₇) or a precipitate obtained from a hydrofluoric acid solution of a tantalum compound.

### Examples

The present invention will be further illustrated by means of Examples in which a niobium compound is dissolved in hydrofluoric acid. However, the present invention is not limited to those examples.

### (EXAMPLE 1)

To a transparent PFA-made 1 L-volume vessel equipped with a stirrer, was transferred 500 g of 75% HF or 495 g of 75% HF plus 5 g of 98% sulfuric acid, to which was added, with stirring over about three hours, 150 g of ferroniobium containing metal impurities as shown in Table 1. The resulting mixture was further stirred at room temperature. Then, the insoluble residue was filtered out, and a solution of niobium in hydrofluoric acid containing niobium at 300 g/L was obtained.

The solution of niobium in hydrofluoric acid was kept with stirring at -20°C for two hours, to allow a niobium compound to precipitate. The precipitate was recovered by filtration, and to this recovered precipitate melted into a liquid was added 65 g of a 28% aqueous solution of ammonia so that the compound now turning into niobium hydroxide was allowed to precipitate. The precipitate was recovered by filtration and separated from ammonium fluoride and other elements, to provide niobium hydroxide.

The niobium hydroxide was fired at 1000°C in an electric furnace to provide niobium oxide. The obtained niobium oxide product was analyzed by inductively coupled plasma-atomic emission spectroscopy (ICP-AES), and the impurities it contained were found to be as shown in Table 1.

### (EXAMPLE 2)

To a transparent PFA-made 1 L-volume vessel equipped with a stirrer, was transferred 500 g of 100% HF (anhydride), 75% HF, 50% HF or 30% HF, to which was added at -20°C or at room temperature, with stirring over about three hours, 150 g of niobium oxide containing metal impurities as shown in Table 1. The resulting mixture was further stirred at room temperature. For the mixture resulting from the addition of niobium oxide to 50% HF or 30% HF, the addition was performed while the mixture was circulated with stirring at 70°C. Then, the insoluble residue was filtered out, and a solution of niobium in hydrofluoric acid containing niobium at about 300 g/L was obtained. In the same manner as described above, to a transparent PAF-made 1L-volume vessel equipped with a stirrer, was transferred a mixture comprising 495 g of 50% HF and 5 g of 98% sulfuric acid, or 495 g of 50% HF and 5 g of 69% nitric acid.

The niobium oxide described above is a niobium oxide product commercially available which had been refined so as to contain niobium oxide at 98%.

The niobium solution prepared as above was analyzed by ICP-AES which showed that the solution contained, as impurities, Ta at about 2000 ppm, and Fe and Ti at 250 ppm or higher each.

The solution of niobium in hydrofluoric acid or in the acid mixture was kept at -20°C with stirring for two hours, to allow a niobium compound to precipitate. The precipitate was recovered by filtration, the recovered niobium precipitate was melted into a liquid to which was added 65 g of a 28% aqueous solution of ammonia so that the compound now turning into niobium hydroxide was allowed to precipitate. The precipitate was recovered by filtration being separated from ammonium fluoride and other elements, to provide niobium hydroxide.

The niobium hydroxide was fired at 1000°C in an electric furnace to provide niobium oxide. The obtained niobium oxide product was analyzed by ICP-AES which showed that the impurities contained in the product were as shown in Table 2.

### (EXAMPLE 3)

To a transparent PFA-made 1 L-volume vessel equipped with a stirrer, was transferred 500 g of 50% HF, to which was added at room temperature with stirring, 130 g of tantalum oxide containing metal impurities as shown in Table 3. The mixture was circulated at 70°C for about five hours with stirring.

Then, the insoluble residue which was small in amount was filtered out, and a solution of tantalum in hydrofluoric acid containing tantalum at about 300 g/L was obtained. In the same manner as described above, to a transparent PAF-made 1L-volume vessel equipped with a stirrer, was transferred a mixture comprising 495 g of 50% HF and 5 g of 98% sulfuric acid, or 495 g of 50% HF and 5 g of 69% nitric acid. The tantalum oxide described above is a tantalum oxide product commercially available which had been refined so as to contain tantalum oxide at 98%.

The solution of niobium in hydrofluoric acid or in the acid mixture was kept at -20°C with stirring for two hours, to allow a tantalum compound to precipitate. The precipitate was recovered by filtration, the recovered tantalum precipitate was melted into a liquid to which was added 65 g of a 28% aqueous solution of ammonia so that the compound now turning into tantalum hydroxide was allowed to precipitate. The precipitate was recovered by filtration being separated from ammonium fluoride and other elements, to provide tantalum hydroxide.

The tantalum hydroxide was fired at 1000°C in an electric furnace to provide tantalum oxide. The obtained tantalum oxide product was analyzed by ICP-AES which showed that the impurities contained in the product were as shown in Table 3.

Inspection of the results shown in Table 1 reveals that it is possible to greatly reduce the contents of impurities such as Ti, Fe, etc., by subjecting ferroniobium or the starting material to single-step crystallization, particularly to reduce the content of Ta to a level one fifth of the initial level by the single-step crystallization.

Inspection of the results shown in Table 2 reveals that it is possible to reduce the contents of impurities such as Ti, Fe, etc., as well as Ta, and to obtain a refined niobium product having a 99.9% (3N) purity, by subjecting niobium oxide having a 98% purity or the starting material to single-step crystallization after its dissolution to 100% HF (HF anhydride), and that the impurity removing property of the HF solution varies depending on its HF concentration: the HF solution can more effectively remove impurities such as Ti, Fe, Ta, etc., as its HF concentration becomes lower, and it is possible to provide a refined niobium product having a purity up to 99.99% (4N).

When the impurity removing property is compared between the neat HF solution and the same HF solution plus another acid (acid mixture), the acid mixture can more effectively remove impurities such as Ti, Fe, etc. than does the neat HF solution.

Inspection of the results shown in Table 3 reveals that it is possible to greatly remove impurities such as Nb, Ti, Fe, etc., by subjecting tantalum oxide or the starting material to single-step crystallization.

As has been demonstrated above, it is possible to efficiently remove all the impurities contained in a niobium or tantalum compound by subjecting the niobium or tantalum compound to a crystallization step according to the invention, and thus to easily purify the niobium or tantalum compound.

**(TABLE 1)**

| EXAMPLE 1 | | | | | | |
|---|---|---|---|---|---|---|
| | Impurity content (ppm) | | | | | |
| | Ta | Ti | Fe | Ni | Al | Sb |
| Ferroniobium Starting material | 3300 | 1400 | 480000 | 230 | 450 | 120 |
| 75% HF--> crystalliz. | 660 | 5 | 10 | 1 | 1 | <0.5 |
| 75% HF + H₂SO₄--> crystalliz. | 630 | 1 | 5 | <0.5 | <0.5 | <0.5 |

The numerals represent weights relative to the weight of Nb₂O₅

**(TABLE 2)**

| EXAMPLE 2 | | | | | | |
|---|---|---|---|---|---|---|
| | Impurity content (ppm) | | | | | |
| | Ta | Ti | Fe | Ni | Al | Sb |
| Niobium oxide Starting material | 1610 | 900 | 310 | 50 | 30 | 20 |
| 100% HF--> crystalliz. | 410 | 10 | 10 | 1 | 3 | 1 |
| 75% HF--> crystalliz. | 250 | 5 | 5 | <0.5 | <0.5 | <0.5 |
| 50% HF--> crystalliz. | 140 | 5 | 5 | <0.5 | <0.5 | <0.5 |
| 50% HF + H₂SO₄--> crystalliz. | 110 | <0.5 | <0.5 | <0.5 | <0.5 | <0.5 |
| 50% HF + HNO₃--> crystalliz. | 110 | 1 | <0.5 | <0.5 | <0.5 | <0.5 |
| 30% HF--> crystalliz. | 80 | 3 | 3 | <0.5 | <0.5 | <0.5 |

The numerals represent weights relative to the weight of Nb₂O₅

**(TABLE 3)**

| EXAMPLE 3 | | | | | | |
|---|---|---|---|---|---|---|
| | Impurity content (ppm) | | | | | |
| | Ta | Ti | Fe | Ni | Al | Sb |
| Tantalum oxide Starting material | 1200 | 1000 | 1100 | 300 | 200 | 20 |
| 50% HF--> crystalliz. | 100 | 5 | 5 | <0.5 | <0.5 | <0.5 |
| 50% HF + H₂SO₄--> crystalliz. | 90 | <0.5 | <0.5 | <0.5 | <0.5 | <0.5 |

### Industrial Applicability

It is possible according to the inventive method to easily obtain a highly pure niobium compound (industrial product) from a starting material containing a low concentration of niobium such as crude ore. It is also possible to easily obtain a highly pure niobium compound containing niobium at 99.9% (3N) or higher by using, as a starting material, an industrial product comprising a niobium compound which has been refined so as to contain niobium at about 98%. It is also possible according to the inventive method to recycle niobium compounds abandoned during niobium refining.

Needless to say, niobium compound crystals or niobium compounds obtained after the crystallization step may be treated as an intermediate in the production of other niobium compounds containing niobium at a high purity. It is possible by using such a highly pure niobium compound obtained by the above method as a starting material to isolate highly pure niobium metal which can be used as a highly functional material in various fields including electronics and optics.

A feature of the inventive method consists in the simplified purification of a niobium compound. The inventive method is roughly based on two processes, i.e., (1) dissolving process and (2) precipitation process. The inventive method is particularly characterized by the precipitation process which serves as a primary treatment for removing impurities and which will be simply executed even at an industrial scale.

Needless to say, it is also possible to obtain a highly pure tantalum compound by using the same method as above.

## Claims

1. Method for purifying a niobium compound and/or tantalum compound whereby a niobium compound and/or tantalum compound dissolved in a solvent is allowed to precipitate to be isolated.

2. Method according to Claim 1 for purifying a niobium compound and/or tantalum compound wherein the niobium compound and/or tantalum compound is a niobium oxide and/or tantalum oxide.

3. Method according to Claim 1 or 2 for purifying a niobium compound and/or tantalum compound wherein the solvent is an aqueous solution of hydrofluoric acid.

4. Method according to Claim 3 for purifying a niobium compound and/or tantalum compound wherein the water content of the aqueous solution of hydrofluoric acid is 80 wt% or lower.
